# EUROPÄISCHE PATENTSCHRIFT

(11) **EP 2 420 198 B1**
(45) Veröffentlichungstag und Bekanntmachung des Hinweises auf die Patenterteilung: **08.04.2015**
(21) Anmeldenummer: 10173465.5
(22) Anmeldetag: 19.08.2010
(51) Int. Cl.: A61C 1/08

(54) **Handwerkzeug mit einer Beleuchtungsvorrichtung**
Hand tool with a lighting device
Outil manuel doté d'un dispositif d'éclairage

(43) Veröffentlichungstag der Anmeldung: 22.02.2012
(73) Patentinhaber: Asetronics AG, 3018 Bern 18 (CH); B-Productions GmbH, 3673 Linden (CH)
(72) Erfinder: Widmer, Peter, 3412 Heimiswil (CH); Maurer, Marcel, 2560 Nidau (CH); Maurer, Marc, 3007 Bern (CH); Jordi, Urs, 3006 Bern (CH)
(74) Vertreter: Rutz & Partner

(56) Entgegenhaltungen:
- FR-A1- 2 687 060
- US-A- 3 109 238
- US-A- 6 030 210
- US-A1- 2008 045 802

## Beschreibung

Die Erfindung betrifft ein insbesondere für Zahnärzte und Dentaltechniker vorgesehenes Handwerkzeug mit einer Beleuchtungsvorrichtung gemäss dem Oberbegriff von Patentanspruch 1.

Insbesondere im Bereich der Dentaltechnik werden von Hand bedienbare Werkzeuge verwendet, die einen Werkzeugkörper aufweisen, der frontseitig mit einem Werkzeugkopf versehen ist. Vom Werkzeugkopf wird ein Werkzeug, wie ein Bohrer oder ein Keil, gehalten, durch eine vorzugsweise im Werkzeugkopf vorgesehene Maschine angetrieben wird. Dazu wird der Maschine das erforderliche Medium, wie Luft, Wasser oder elektrischer Strom über entsprechende Medienleitungen zugeführt. In verschiedenen Ausgestaltungen bekannter Handwerkzeuge wird das Werkzeug gekühlt und vom Arbeitsobjekt abgetragenes Material entfernt. Dazu werden weitere Medien, wie Luft und Wasser, eingesetzt, die gegebenenfalls über separate Medienleitungen bis zum Werkzeug geführt werden. Sofern im Werkzeugkopf keine Maschine für den Antrieb des Werkzeugs vorgesehen ist, wird beispielsweise eine Antriebswelle in den Werkzeugkopf hinein geführt. Bekannte Handwerkzeuge sind zudem oft mit einer Beleuchtungsvorrichtung versehen, welche das Arbeitsobjekt beleuchtet. Dabei wird innerhalb des Handwerkzeugs üblicherweise wenigstens eine Lichtquelle, vorzugsweise eine Leuchtdiode vorgesehen, deren Licht über einen Lichtleiter dem Arbeitsobjekt zugeführt wird.

Bei einem in der US4804329A offenbarten Handwerkzeug wird der Lichtleiter z.B. von einer im Werkzeugkörper vorgesehenen Lampe bis zu einer Öffnung im Werkzeugkopf geführt, die in unmittelbarer Nähe des Werkzeugs liegt. Auf diese Weise resultieren eine nicht homogene Beleuchtung des Arbeitsobjekts und ein Schattenwurf durch das beleuchtete Werkzeug.

Eine verbesserte Beleuchtung eines Arbeitsobjekts wird mit dem in der US6095810A offenbarten Handwerkzeug erzielt. An einem Ende dieses Handwerkzeugs ist eine konisch gestaltete Abdeckung vorgesehen, aus der das Werkzeug herausragt. Im Körper der Abdeckung sind Durchgangshohlräume ausgebildet, in denen Leuchtdioden angeordnet sind, deren Strahlung durch optische Fasern bzw. Lichtleiter zum Werkzeug geführt wird. Beispielsweise weist die Abdeckung vier Quadranten auf, in denen je eine Leuchtdiode und ein Lichtleiter angeordnet sind. Auf diese Weise gelingt es, das Arbeitsobjekt gleichmässiger zu beleuchten.

Bei beiden genannten Lösungen resultieren relativ hohe Aufwendungen zur Herstellung der Vorrichtungsteile des Handwerkzeugs. In den Vorrichtungsteilen sind Kanäle für die Installation der Lichtleiter vorzusehen, weshalb die Vorrichtungsteile oder Gehäuseteile Formen aufweisen, die nur mit erheblichem Aufwand und entsprechend teueren Fertigungsvorrichtungen zu realisieren sind. Ferner verursacht der erforderliche Einbau der Lichtleiter in die Kanäle einen entsprechend hohen Installationsaufwand.

Die entsprechenden Kanäle sind ferner einer Verschmutzung durch Feinstaub ausgesetzt, weshalb eine aufwändige Wartung dieser Handwerkzeuge resultiert. Zudem ist bei der Durchführung von Reparaturen Sorge zu tragen, dass die installierten Lichtleiter nicht beschädigt werden.

Weiterhin ist zu beachten, dass die Kanäle für die Lichtleiter relativ viel Raum in Anspruch nehmen, weshalb sich der verbleibende Raum für weitere wichtige Elemente des Handwerkzeugs, wie die eingangs genannten Medienleitungen oder Maschinen, entsprechend reduziert. Insbesondere für den Fall, dass eine dem Antrieb des Werkzeugs dienende Maschine in Werkzeugkopf angeordnet werden soll, reduziert sich der Raum für die Durchführung der Medienleitungen, einschliesslich der Lichtleiter.

Aus der US2003042803A1 ist bekannt, die Leuchtdioden frontseitig am Handwerkzeug zu montieren, weshalb auf die Verwendung der Lichtleiter verzichtet werden kann. Die Montage der Leuchtdioden an der Aussenseite des Gehäuses ist jedoch mit weiteren Nachteilen verbunden. Einerseits wird wiederum keine gleichmässige Lichtverteilung erzielt. Andererseits ergibt sich wiederum ein erhöhter Aufwand, da die Leuchtdioden zu reinigen sind, um eine Lichtreduktion zu vermeiden.

Bei den beschriebenen Vorrichtungen ist ferner zu beachten, dass die Austrittsstellen des Lichts während der Benutzung des Handwerkzeugs, z.B. durch Flüssigkeitsspritzer eines Blut-Wasser-Gemisches, vollständig abgedeckt werden können, wonach sich die Lichtverhältnisse von einem Moment zum anderen signifikant ändern können.

Die Komplexität der genannten Vorrichtung, die Kanäle für die Lichtleiter aufweisen, verhindert ferner einen flexiblen Ausbau des Handwerkzeugs. Weitere wünschenswerte Funktionen sind aufgrund des zur Verfügung stehenden Raumes nicht oder kaum realisierbar. Eine weitere Miniaturisierung des Handwerkzeugs, welche generell wünschenswert ist um das Arbeiten zu erleichtern, ist ebenfalls kaum zu realisieren.

Aus der US3109238A ist ein portables Dentalwerkzeug mit einem Bohrer bekannt, welches ein transparentes Kopfstück aufweist, durch das eine mit dem Bohrer gekoppelte Antriebswelle hindurchgeführt ist und durch das hindurch von einer Lichtquelle abgegebenes Licht in Richtung zum Bohrer hin geleitet wird.

Die US2008/045802A1 offenbart einen medizinischen Handgriff mit einer Beleuchtungsvorrichtung mit zumindest einem als Strahlungsquelle ausgebildeten optischen Halbleiterbauelement, das mit einem transparenten, thermoplastischen Kunststoff umhüllt ist. Die Beleuchtungsvorrichtung kann in einen Hohlraum eingesetzt werden, welcher frontseitig am Handgriff vorgesehen ist.

Die FR2687060A1 offenbart einen medizinischen Handgriff mit einer Beleuchtungsvorrichtung, die eine punktförmige Lichtquelle umfasst, von der Licht an einen optischen Koppler abgegeben wird, welcher das Licht konzentriert an einen Arbeitsbereich abgibt.

Der vorliegenden Erfindung liegt daher die Aufgabe zugrunde, ein verbessertes, mit einer Beleuchtungsvorrichtung versehenes Handwerkzeug zu schaffen.

Insbesondere ist ein zahnärztliches oder dentaltechnisches Handwerkzeug mit einer Beleuchtungsvorrichtung zu schaffen, welche eine gleichmässige weitgehend schattenfreie Ausleuchtung des Arbeitsobjekts erlaubt.

Das Handwerkzeug soll zudem eine kostengünstigere Herstellung und eine einfachere Wartung erlauben.

Weiterhin soll der für das Handwerkzeug, insbesondere den Werkzeugkopf zur Verfügung stehende Raum optimal genutzt werden, so dass eine weitere Miniaturisierung des Handwerkzeugs oder die Realisierung weiterer Leistungsmerkmale möglich ist.

Ferner sollen zusätzliche solche Leistungsmerkmale vorgeschlagen werden.

Die Lösung dieser Aufgabe gelingt mit einem Handwerkzeug, welches die in Patentanspruch 1 angegebenen Merkmale aufweist. Vorteilhafte Ausgestaltungen des erfindungsgemässen Handwerkzeugs sind in weiteren Ansprüchen definiert.

Das insbesondere für Zahnärzte und Dentaltechniker vorgesehene Handwerkzeug weist eine Beleuchtungsvorrichtung, einen Werkzeugkörper und einen damit verbundenen Werkzeugkopf auf, der frontseitig ein Werkzeug hält und der eine Lichttransfereinheit aufweist, der Licht von wenigstens einer Leuchtdiode zuführbar ist.

Erfindungsgemäss umfasst die Lichttransfereinheit einen aus transparentem Werkstoff, wie Kunststoff oder Glas, gefertigten Ring, der die Längsachse des Werkzeugkopfs vorzugsweise vollständig umschliesst, der mit einer Seite, vorzugsweise der dem Werkzeug abgewandten Rückseite, der wenigstens einen Leuchtdiode gegenüber liegt und dessen Frontseite, von der während des Betriebs des Handwerkzeugs Licht abgegeben wird, in die Richtung des Werkzeugs weist. Die erfindungsgemässe Lichttransfereinheit, die vorzugsweise eine hohlzylindrische Form aufweist oder umfasst, erlaubt eine vorteilhafte Leitung und homogene Verteilung der zugeführten Strahlung. An der Rückseite, der Innenseite oder der Aussenseite punktuell in den Körper der Lichttransfereinheit, gegebenenfalls in den Körper des Hohlzylinders, eingekoppelte Strahlung wird über die ganze Lichttransfereinheit gleichmässig verteilt. Die Strahlung kann an verschiedenen Stellen eingekoppelt werden, wobei insbesondere bei seitlicher Einkopplung vorzugsweise wenigstens ein reflektierendes Element vorgesehen wird, welches die Lichtverteilung unterstützt.

Die Einleitung und die Verteilung der Strahlung wird vorzugsweise optimiert, indem die den Leuchtdioden zugewandte Seite, gegebenenfalls die Rückseite der Lichttransfereinheit, poliert und/oder mit Einformungen von optischen Elementen versehen wird. Auf diese Weise gelingt bereits mit nur einer Leuchtdiode eine gute Bestrahlung des Arbeitsobjekts. Die Strahlung einzelner Leuchtdioden oder von Gruppen von Leuchtdioden wird optimal verteilt, so dass die Strahlung mit einer nahezu homogenen Verteilung an der Frontseite der Lichttransfereinheit austritt. In vorzugsweisen Ausgestaltungen werden zur Fokussierung der Strahlung oder zur Änderung der Intensität oder des Farbspektrums der Strahlung, mit der ein Arbeitsobjekt beleuchtet wird, einzelne der Leuchtdioden oder Gruppen von Leuchtdioden zuoder abgeschaltet oder individuell angesteuert werden.

Durch die wahlweise Zuschaltung von Leuchtdioden, die Strahlung in unterschiedlichen Wellenlängenbereichen abgeben, kann eine gewünschte Lichtfarbe, gegebenenfalls auch weisses Licht, wahlweise eingestellt werden. Vorzugsweise werden die Leuchtdioden derart angesteuert, dass die Strahlungsintensität jeder Leuchtdiode einstellbar und somit die additiv erzeugte Lichtfarbe, gegebenenfalls auch weisses Licht, präzise einstellbar ist. Durch die Zuschaltung oder Abschaltung von Leuchtdioden, die unterschiedlich ausgerichtet oder mit unterschiedlichen optischen Elementen bestückt sind, kann die Strahlung unterschiedlich in die Lichttransfereinheit eingekoppelt werden, weshalb die Strahlung an der Frontseite mit entsprechender Fokussierung austritt. Auf dieses Weise kann die Fokussierung ohne mechanische Hilfsmittel in einfacher Weise durchgeführt werden.

Zur dauerhaften Einstellung der Farbeigenschaften kann die Lichttransfereinheit auch mit entsprechenden Farbstoffen, insbesondere Farbpigmenten versehen werden. Auf diese Weise dient die Lichttransfereinheit nicht nur dem Transfer sondern auch einer erwünschten Filterung der Strahlung. Besonders vorteilhaft kann die Lichttransfereinheit aus einer transparenten oder transparent eingefärbten, gegebenenfalls lichtstreuenden Giessharzmasse gefertigt werden, wie sie z.B. für die Abdeckung von optischen Elementen verwendet wird. Derartige Giessharzmassen, deren Eigenschaften auch im Bereich höherer Temperaturen erhalten bleiben, sind beispielsweise aus der US4178274A bekannt.

Die Lichttransfereinheit kann daher vorteilhaft mittels eines Extrusionsverfahrens oder Giessverfahrens gefertigt werden. Alternativ kann die Lichttransfereinheit auch durch mechanische Bearbeitung, insbesondere durch Bohren und Drehen, gefertigt werden.

Auf die arbeitsintensive Installation flexibler Lichtleiter bzw. Glasfasern kann verzichtet werden. Stattdessen wird eine weitgehend formstabile Lichttransfereinheit verwendet, die leicht installierbar ist und zahlreiche weitere Funktionen erfüllen kann, wie dies nachstehend beschrieben ist. Ferner kann die formstabile Lichttransfereinheit vorteilhaft bearbeitet werden, um die Einkopplung und Auskopplung der Lichtstrahlung nach Wunsch festzulegen.

Die Lichttransfereinheit umfasst den Ring sowie ein einstückig daran anschliessendes Frontstück, welches sich kegelförmig oder halbkugelförmig bis zu einem koaxial zur Längsachse verlaufenden Montagekanal verjüngt, in dem das Werkzeug in einer Montagevorrichtung installierbar ist. Das in die Lichttransfereinheit eingekoppelte Licht wird dabei über das Frontstück verteilt und wird somit über eine grössere Fläche abgegeben, wodurch eine weitere Optimierung der Lichtverhältnisse, insbesondere eine gleichmässigere Ausleuchtung und eine Reduktion des Schattenwurfs, resultiert.

Die Lichttransfereinheit kann zudem mit geringem Aufwand weiter bearbeitet werden, um eine gewünschte Abgabe des zugeführten Lichts zu erzielen. Beispielsweise werden Zonen innerhalb oder ausserhalb der Lichttransfereinheit, vorzugsweise an der Aussenfläche des Frontstücks, aufgeraut, so dass eine diffuse Verteilung des Lichts erfolgt. Zonen innerhalb oder ausserhalb der Lichttransfereinheit können ferner strukturiert oder mit der Lichtbrechung dienenden Elementen versehen werden. Beispielsweise können Strukturen einer optischen Linse, z.B. einer Fresnel-Linse, in das Frontstück eingearbeitet werden. Ferner können Zonen innerhalb oder ausserhalb der Lichttransfereinheit mit reflektierenden Materialien versehen werden, mittels derer das Licht in eine gewünschte Richtung reflektiert wird. Auf diese Weise gelingt es, die zugeführte Strahlung mit hoher Effizienz ihrem Bestimmungsort zuzuführen.

In einer vorzugsweisen Ausgestaltung wird das Handwerkzeug zudem mit einer Justiervorrichtung versehen, welche es erlaubt, die Einkopplung der Strahlung in die Lichttransfereinheit zu ändern. Dazu kann die Ausrichtung oder der Abstand der Leuchtdioden von der Lichttransfereinheit variabel ausgestaltet werden. Besondere Bedeutung erlangen in diesem Fall die vorzugsweise vorgesehenen Einformungen in der Lichttransfereinheit, durch die eine erwünschte Lichtlenkung erzielt wird. Sofern die Lichttransfereinheit vollständig im Werkzeugkopf und die Leuchtdioden frontseitig am Werkzeugkörper vorgesehen sind, kann der Abstand durch eine entsprechend ausgestaltete Verbindungsvorrichtung justiert werden. Beispielsweise wird ein elastisches Element, wie eine Spiralfeder oder eine Schraubenfeder, zwischen dem Werkzeugkopf und dem Werkzeugkörper vorgesehen, welche diese beiden Teile in einem vorgesehenen Abstand fixiert. Ferner können die Leuchtdioden auf einem justierbaren Träger vorgesehen werden. Weiterhin sind Kombinationen dieser beiden Varianten vorteilhaft realisierbar.

Die Leuchtdioden werden, mit oder ohne Gehäuse, vorzugsweise in COB (Chip-On-Board-Technologie)-Technik oder SMD (Surfacemounted device)-Technik auf einem fest installierten oder zumindest teilweise bewegbaren Leuchtdiodenträger installiert, so dass nur wenig Raum in Anspruch genommen wird. Dabei können die Leuchtdioden in COB-Technik oder SMD-Technik vorteilhaft auf einem Träger angeordnet werden, der z.B. an die Form der Rückseite der Lichttransfereinheit angepasst ist. Dieser feste oder flexible Träger, der zum Beispiel ein Keramik-Substrat oder ein isoliertes Metallsubstrat aufweist, kann ferner mit gedruckten elektrischen Leitungen und Kontakten sowie mit elektronischen Bauteilen, wie einem Mikroprozessor versehen sein, der zumindest die Lichtabgabe steuert. Auf diese Weise kann ein wesentlicher Teil der Beleuchtungstechnik mit vorteilhaften Fertigungstechnologien raumsparend, mit geringen Kosten, jedoch mit einer hohen Funktionalität realisiert werden. Vorzugsweise wird vorgesehen, dass der Leuchtdioden-Träger durch den Anwender ausgetauscht werden kann. Dadurch kann der Anwender einen Träger mit Leuchtdioden einsetzen, welche Strahlung mit einem gewünschten Farbspektrum abgeben. Auf zusätzliche Filter oder eine elektronische Steuerung zur Farbmischung kann in diesem Fall verzichtet werden.

Zur Fokussierung der Lichtstrahlung oder zur Einstellung eines gewünschten Farbspektrums wird in vorzugsweisen Ausgestaltungen vorgesehen, dass zwischen den Werkzeugkopf und den Werkzeugkörper vorzugsweise wahlweise eine Filterscheibe oder eine Fokussierscheibe montierbar ist. Auf diese Weise kann der Anwender die Art und Intensität der abgegebenen Strahlung wahlweise einstellen.

Da die Lichttransfereinheit eine grosse Aussenfläche aufweist, ist es möglich, Lichtstrahlung frontal und seitlich radial in einem Winkel von 360° abzugeben. In vorzugsweisen Ausgestaltungen wird eine Vorrichtung vorgesehen, die es erlaubt, diesen Abstrahlungsbereich wahlweise einzuschränken oder zu öffnen. Dazu können an einzelnen Vorrichtungsteilen oder an einer separaten Abdeckung z.B. Schieber oder Fenster vorgesehen werden.

In weiteren vorzugsweisen Ausgestaltungen ist innerhalb der Lichttransfereinheit wenigstens ein Medienkanal, wie ein Medienkanal für die Zufuhr oder Ableitung gasförmiger Medien, flüssiger Medien oder für die Installation elektrischer Leitungen vorgesehen. Auf diese Weise gelingt es, die genannten Medien vorteilhaft an den Bestimmungsort zu führen. Die innerhalb der Lichttransfereinheit vorgesehenen Leitungen und Kanäle benötigen keinen zusätzlichen Raum, sind gut geschützt und müssen nicht gesondert installiert werden. Da die Lichttransfereinheit und die Kanäle für die Medien miteinander kombiniert werden, bleibt Raum für weitere Vorrichtungsteile zur Verfügung. Zudem kann der Werkzeugkopf mit der erfindungsgemässen Lichttransfereinheit vorteilhaft miniaturisiert werden.

Ein besonders kompakterer Aufbau des Werkzeugkopfs resultiert dann, wende die Lichttransfereinheit zusätzlich das Gehäuse oder ein Gehäuseteil des Werkzeugkopfs bildet. Dadurch resultiert ein weiterer sprunghafter Raumgewinn, da die Vorrichtung zur Lichtleitung und vorzugsweise auch die Kanäle für die Zufuhr und Ableitung der Medien in das Gehäuse des Werkzeugkopfs integriert werden können.

Aufgrund der genannten Raumersparnisse und der Formstabilität der Lichttransfereinheit ist eine Maschine in die Lichttransfereinheit eingebaut, die dem Antrieb des Werkzeugs dient. Ein Elektromotor oder eine mittels Wasser und/oder Luft angetriebene Turbine ist in die Lichttransfereinheit integriert. Dazu können die erforderlichen Lagerelemente, vorzugsweise an der Frontseite und der Rückseite, in die Lichttransfereinheit integriert werden. An der Frontseite der Lichttransfereinheit ist eine Montagevorrichtung eingebaut, mittels der das Werkzeug mit der Maschine gekoppelt werden kann.

Da die Lichttransfereinheit den zur Verfügung stehenden Raum optimal nutzt, kann in einer vorzugsweisen Ausgestaltung ein optisches Gerät in das Frontstück der Lichttransfereinheit integriert werden, mittels dessen der Arbeitsvorgang optisch aufgenommen wird. Beispielsweise wird das optische Gerät jeweils bei der Aktivierung des Handwerkzeugs betätigt. Auf diese Weise können alle Arbeitsvorgänge des Zahnarztes automatisch aufgenommen und gespeichert werden.

Die Erfindung wird nachstehend anhand von Zeichnungen näher erläutert. Dabei zeigt:
- Fig. 1: ein erfindungsgemässes Handwerkzeug 100, welches einen Werkzeugkörper 2 und einen Werkzeugkopf 1 umfasst, an dem parallel zu einem frontseitig montierten Werkzeug 12 eine homogene Licht Lichtstrahlung L austritt;
- Fig. 2: das Handwerkzeug 100 von Figur 1 mit dem demontiertem Werkzeugkopf 1, der eine Lichttransfereinheit 11 umfasst, innerhalb der eine dem Antrieb des Werkzeugs 12 dienende Maschine 14 angeordnet ist;
- Fig. 3: das Handwerkzeug 100 von Figur 1 in einer Explosionsdarstellung;
- Fig. 3a: die aus der Lichttransfereinheit 11 entnommene Maschine 14, die ein Bohrwerkzeug 12 hält und der über die Medienleitungen 41, 42, 5 Medien 40, 50 zugeführt werden;
- Fig. 4: die Frontseite des Handwerkzeugs 100 von Figur 1 mit einem vorzugsweise ausgestalteten Werkzeugkopf 1, der eine mit einem Ring 112 versehene Lichttransfereinheit 11 besteht;
- Fig. 5: die Lichttransfereinheit 11 von Figur 4 in einer weiteren vorzugsweisen Ausgestaltung;
- Fig. 6: die Rückseite der Lichttransfereinheit 11 von Figur 5; und
- Fig. 6a: die Lichttransfereinheit 11 von Figur 6, in deren Innenraum 1120 mehrere Leuchtdioden 25 angeordnet sind; und
- Fig. 7: Mittel 191; 290, 291 zur lösbaren und justierbaren Verbindung des Werkzeugkopfs 1 und des Werkzeugkörpers 2 sowie zur Justierung der Leuchtdioden 25.

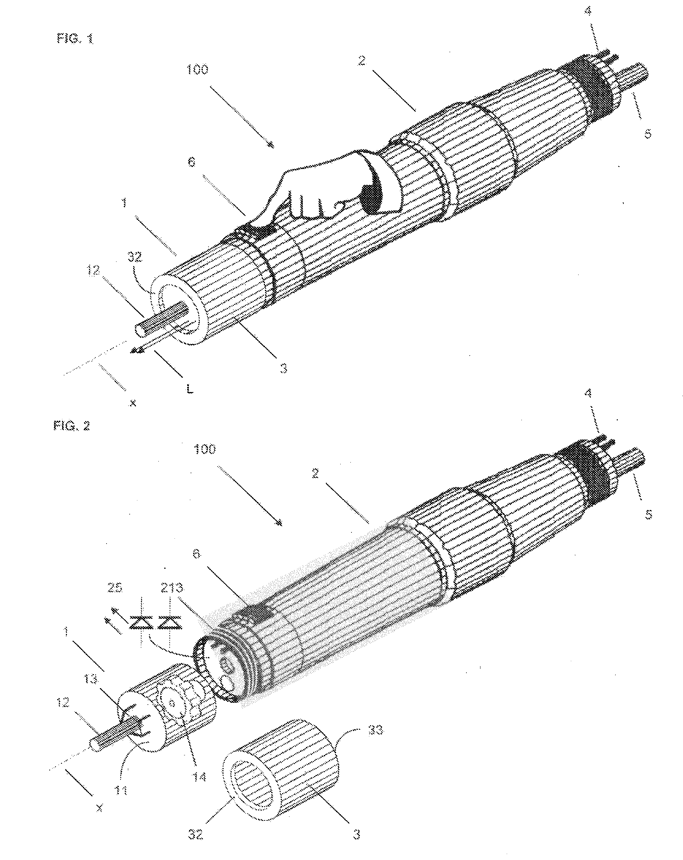

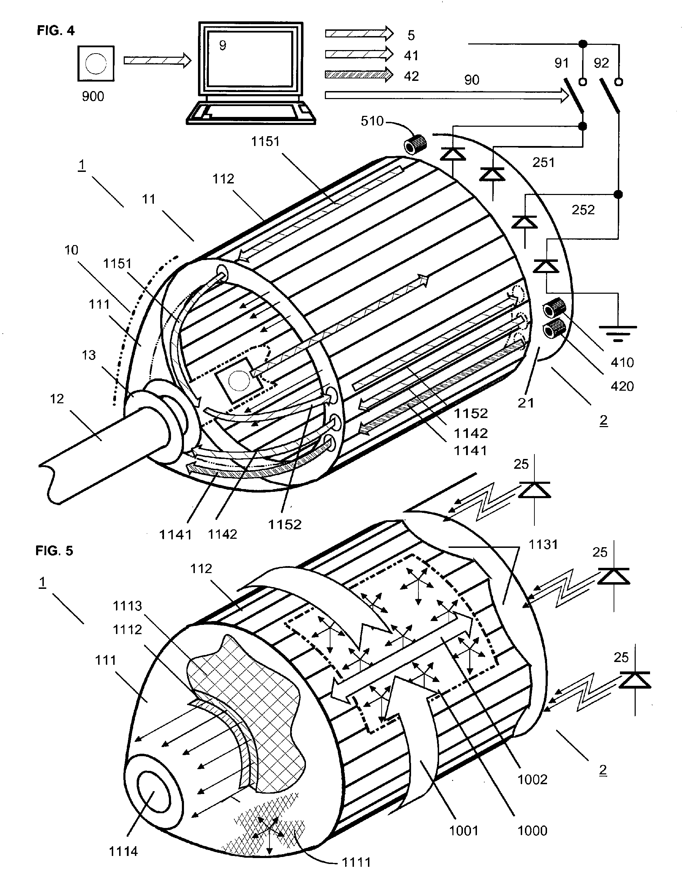

Figur 1 zeigt ein erfindungsgemässes Handwerkzeug 100, welches einen Werkzeugkörper 2 und einen Werkzeugkopf 1 umfasst, an dem parallel zu einem frontseitig montierten Werkzeug 12 eine homogene Lichtstrahlung L austritt. Der Werkzeugkopf 1 ist mittels eines hülsenförmigen Verbindungsteils 32 gehalten, welches frontseitig einen Ringflansch 32 und rückseitig ein Innengewinde 33 aufweist, welches mit einem Aussengewinde 213 verbindbar ist, welches frontseitig am Werkzeugkörper 2 vorgesehen ist (siehe Figur 2). An der Frontseite des Handwerkzeugkörpers 2 sind Anschlussleitungen 4, 5 gezeigt, über die Medien, wie Luft, Wasser oder elektrischer Strom zuführbar sind. Das Handwerkzeug 100, welches anhand von internen oder externen Eingabemitteln, z.B. dem gezeigten Schalter 6 bzw. 60, in Betrieb gesetzt werden kann, wird vom Anwender, z.B. einem Zahnarzt oder Dentaltechniker, mit einer Hand erfasst und zum Arbeitsobjekt geführt. Die Steuerung und Betätigung des Handwerkzeugs 100 kann beispielsweise auch durch Fusspedalen, erfolgen, mittels derer beispielsweise die Luftzufuhr gesteuert wird. Elektrischer Strom kann von einer externen Stromquelle zugeführt oder innerhalb des Handwerkzeugs 100 mittels einer Turbine und eines Generators erzeugt werden. Eine Steuereinheit zur Bedienung des Handwerkzeugs 100, insbesondere zur Steuerung der Beleuchtung, kann innerhalb oder ausserhalb des Handwerkzeugs 100 vorgesehen. Entsprechende Eingabemittel 6 werden am Handwerkzeug 100 und/oder an einer externen Steuereinheit 9 vorgesehen (siehe Figur 4).

Figur 2 zeigt das Handwerkzeug 100 von Figur 1 nach der Demontage des Werkzeugkopfs 1, welcher eine Lichttransfereinheit 11 umfasst, innerhalb der eine dem Antrieb des Werkzeugs 12 dienende Maschine 14 angeordnet ist.

Die Maschine 14 ist vorzugsweise eine Turbine, die mittels Luftzufuhr angetrieben wird und mit einer Kopplungsvorrichtung 13 verbunden, in die das Werkzeug 12 einsetzbar ist. Frontseitig am Werkzeugkörper 2 sind Anschlüsse der Medienleitungen 4, 5 sowie Leuchtdioden 25 vorgesehen, deren Strahlung in die Lichttransfereinheit 11 eingekoppelt wird.

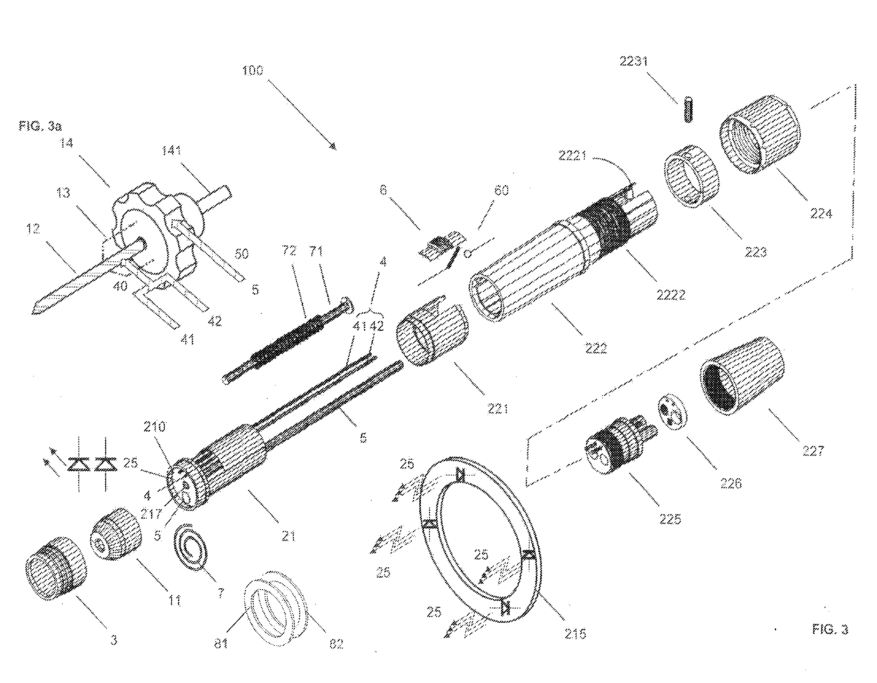

Figur 3 zeigt das Handwerkzeug 100 von Figur 1 in einer Explosionsdarstellung, in der die Vorrichtungsteile in axialer Richtung voneinander getrennt. Vorne ist das Verbindungsteil 3 gezeigt, mittels dessen die Lichttransfereinheit 11 mit einem Anschlussteil 21 des Werkzeugkörpers 2 verbindbar ist. Das Anschlussteil 21 weist frontseitig ein Trägerelement 210 auf, auf dem eine, mehrere oder mehrere Gruppen von Leuchtdioden 25 angeordnet sind. Vorzugsweise werden die Leuchtdioden 25 oder die Gruppen von Leuchtdioden 25 auch auf einem separaten Leuchtdiodenträger 215 montiert, der als gedruckte Schaltung gefertigt werden kann. Beispielsweise wird ein vorzugsweise ringförmiges Keramiksubstrat oder ein isoliertes Metallsubstrat bzw. eine Metallkernleiterplatte verwendet, auf dem die Leuchtdioden 25, die notwendigen Verbindungsleitungen sowie Anschlusskontakte und gegebenenfalls elektronische Bauteile, wie ein der Steuerung dienender Mikroprozessor montiert werden. Die Verwendung eines isolierten Metallsubstrats (IMS) erlaubt es zudem, die bei den elektronischen Bauteilen auftretende Verlustwärme nach aussen abzuleiten.

Bei der Montage unter Anwendung der COB-Technik oder der SMD-Technik können zahlreiche Leuchtdioden 25, die ohne Gehäuse oder mit einem Gehäuse geliefert werden, in hoher Dichte installiert werden. Insbesondere bei automatischer Bestückung des vorgesehenen Substrats kann eine leistungsfähige Beleuchtungseinheit mit zahlreichen Funktionen kostengünstig gefertigt werden.

In vorzugsweisen Ausgestaltungen wird zwischen dem Anschlussteil 210 des Werkzeugkörpers 2 und dem Werkzeugkopf 1 eine Filterscheiben oder ein Filterring 81 eingesetzt, mittels dem die von den Leuchtdioden 25 abgegebene Strahlung gefiltert werden kann. Ferner kann ein optisches Element, wie ein Fokussierring 82 eingesetzt werden, mittels dessen die Strahlung gebündelt oder verteilt wird. In einer weiteren vorzugsweisen Ausgestaltung ist ein elastisches Element 7 wie eine Spiralfeder vorgesehen, der die Lichttransfereinheit 11 nach vorne drückt. Durch Anziehen die Verbindungsteils 3 kann die Lichttransfereinheit 11 gegen den Werkzeugkörper 2 und somit gegen die Leuchtdioden 25 geführt werden. Dadurch kann die Einkopplung der von den Leuchtdioden 25 abgegebenen Strahlung in die Lichttransfereinheit 11 wahlweise eingestellt werden.

Figur 3a zeigt die aus der Lichttransfereinheit 11 entnommene Maschine 14, die mittels der Montagevorrichtung 13 mit einem Bohrwerkzeug 12 gekoppelt ist. Die Maschine 14 ist in dieser vorzugsweisen Ausgestaltung eine Turbine, die eine Turbinenwelle 141 und ein Turbinenrad aufweist, dem über die Medienleitung 5 das Medium Luft 50 zugeführt wird, um die Turbine 14 anzutreiben. Über die Medienleitungen 41 und 42 werden Luft und Wasser zugeführt, die zu einem Luft-Wasser-Gemisch 40 vereint und dem Werkzeug 12 zur Kühlung zugeführt werden.

Am Trägerelement 210 des Werkzeugkörpers 2 sind ferner die Anschlüsse der Medienleitungen 4 bzw. 41, 42, 5 sowie eine Öffnung 217 vorgesehen, durch die ein von einer Spiralfeder 72 gestützter Bedienungskolben 71 hindurch führbar ist. Durch den Bedienungskolben 71 wird die Montagevorrichtung 13 betätigt, um ein Werkzeug 12 einzusetzen oder zu entnehmen. Zum Wechseln des Werkzeugs 12 wird der Bedienungskolben 71 durch die im Anschlussteil 21 vorgesehene Öffnung 217 nach vorn gegen die Maschine 14 bzw. die Turbinenwelle 141 geführt, welche die Montagevorrichtung 13 betätigt. Auf Druck des Bedienungskolbens 71 wird das Werkzeug 12, z.B. ein Bohrer, von der Montagevorrichtung 13 freigegeben. Nach dem Einsetzen eines anderen Werkzeugs 12, z.B. einer Schleifscheibe, wird der Druck auf den Bedienungskolben 71 aufgehoben, so dass dieser mittels der Spiralfeder 72 axial wieder nach hinten geführt und die Montagevorrichtung 13 verschlossen wird.

An der Rückseite des Frontstücks 21 sind die Medienleitungen 4 bzw. 41 und 42, sowie 5 durch weitere Vorrichtungsteile, nämlich durch eine Montagehülse 221, durch ein Zwischenteil 222, durch einen mit einem Betätigungsstift 2231 versehener Haltering 223, und durch eine Betätigungshülse 224 bis zu einem Verbindungsblock 225 geführt. An den Verbindungsblock 225 sind externe Medienleitungen sowie eine Dichtungsscheibe 226 und eine Schutzkappe 227 anschliessbar.

Die Verschiebung des Bedienungskolbens 71 erfolgt mittels des daran anliegenden Betätigungsstifts 2231, der mittels der Betätigungshülse 224 innerhalb eines Längsschlitzes 2221, der im Zwischenteil 222 vorgesehenen ist, vor und zurück geführt werden kann. Durch Drehen der Betätigungshülse 224 wird der mit dem Betätigungsstift 2231 versehene Haltering 223 axial verschoben und der Bedienungskolben 71 betätigt, so dass die Montagevorrichtung 13 betätigt werden kann.

Figur 4 zeigt die Frontseite des Handwerkzeugs 100 von Figur 1 mit einem vorzugsweise ausgestalteten Werkzeugkopf 1, der eine Lichttransfereinheit 11 aufweist, die einen Ring 112 umfasst. Die Wandstärke des Rings 112, die in der gezeigten Ausgestaltung etwa 10% des Aussendurchmessers des Rings 112 beträgt, kann wahlweise festgelegt werden und deutlich, z.B. um den Faktor 2-3, grösser oder kleiner sein. Ein guter Transfer der von zwei Gruppen 251, 252 von Leuchtdioden 25 eingekoppelten Strahlung von der Rückseite zur Frontseite des Rings 112 wird jedoch bereits bei geringen Wandstärken erzielt.

Es ist symbolisch gezeigt, dass die Lichttransfereinheit 11 in einem separaten Gehäuse 10 des Werkzeugkopfs 1 angeordnet sein kann. Erfindungsgemäss dient die Lichttransfereinheit 11 zugleich als Gehäuse des Werkzeugkopfs 1, weshalb auf ein separates Gehäuse 10 verzichtet werden kann. Auf diese Weise resultiert ein einfacher Aufbau des Werkzeugkopfs 1, bei dem innerhalb des Rings 112 viel Raum für die Installation der vorgesehenen Maschine 14 oder für die Durchleitung einer Antriebswelle und von Medienleitungen zur Verfügung steht.

In der vorzugsweisen Ausgestaltung von Figur 4 sind die Medienleitungen 1141, 1142, 1151, 1152 des Werkzeugkopfs 1 jedoch innerhalb der Wand des Rings 112 vorgesehen, weshalb diese optimal geschützt sind und keinen zusätzlichen Raum in Anspruch nehmen. Obwohl Kanäle und Leitungen 1141, 1142, 1151, 1152 einschliesslich der darin geführten Medien 40, 50 innerhalb des Materials der Lichttransfereinheit 11 geführt sind, resultiert aufgrund der geringen Kanaldurchmesser keine wesentliche Beeinträchtigung des Lichttransfers.

Die Medienleitungen 1141, 1142, 1151, 1152 können anhand mechanischer Arbeitsmittel in die Lichttransfereinheit 11 eingefügt werden. Alternativ können zwei zueinander komplementäre Teile der Lichttransfereinheit 11 gefertigt werden, an deren Innenseite bzw. Aussenseite zueinander korrespondierende Kanalhälften vorgesehen sind. Nach dem Ineinanderschieben der beiden Teile in axialer Richtung resultiert eine Lichttransfereinheit 11, wie sie in den Figuren 4-6 gezeigt ist. Sofern z.B. in der Mitte der Wand ein Schnitt durch eine gezeigte Lichttransfereinheit 11 ausgeführt wird, so resultieren ebenfalls die beiden zueinander komplementären Teile, die einschliesslich der Kanäle z.B. durch ein Giessverfahren einfach gefertigt werden können.

Durch die Medienkanäle 1141, 1142 werden Luft und Wasser durch den Ring 112 und durch ein gegebenenfalls frontseitig daran angeformtes Frontstück 111 bis zur Montagevorrichtung 13 geführt und dort, vorzugsweise noch innerhalb der Wand des Frontstücks 111 zu einem Luft-Wasser-Gemisch 40 vereint. Dieses Luft-Wasser-Gemisch 40 wird dem Werkzeug 12 zugeführt, um diese zu kühlen. Durch den Medienkanal 1151 wird Luft zur Turbine 14 geführt und durch den Medienkanal 1152 wieder weggeführt. Der Abluftkanal 1152 kann auch ausserhalb der Lichttransfereinheit 11 geführt werden.

Am Anschlussteil 21, das frontseitig am Werkzeugkörper 2 vorgesehen ist, sind Anschlussstutzen 410, 420, 510 der Medienleitungen 41, 42, 5 angeordnet, die in die in der Lichttransfereinheit 11 vorgesehenen Medienleitungen 1141, 1142, 1151 einführbar sind.

Ferner ist gezeigt dass zwei Gruppen 251, 252 von Leuchtdioden 25 vorgesehen sind, die von einer Steuereinheit 9 durch Betätigung separate Schalter 91, 92 individuell zu-und abgeschaltet werden können. Auf diese Weise kann die Intensität oder auch das Farbspektrum der Strahlung wahlweise eingestellt werden. Die Strahlungen verschiedenartiger Leuchtdioden 25 werden dazu wahlweise kombiniert, um mittels additiver Farbmischung ein gewünschtes Farbspektrum zu erzielen. Sofern zwei oder mehrere Gruppen 251, 252, ... von Leuchtdioden 25 vorgesehen sind, deren Strahlung unterschiedlich in die Lichttransfereinheit 11 eingekoppelt wird, so können die Licht-Einkopplung und die davon abhängige Licht-Auskopplung wahlweise geändert werden. Ein gewünschter Strahlengang kann dabei erzielt werden, indem die Lichttransfereinheit 11 mit entsprechenden Einformungen an der Rückseite oder in der Wand des hohlzylindrischen Ringes 112 oder mit Reflektoren 1113 versehen wird.

In Figur 4 ist ferner gezeigt, dass in einer vorzugsweisen Ausgestaltung ein Gerät 900 in das Frontstück 111 der Lichttransfereinheit 11 integriert werden kann, welches der Bildaufnahme dient. Beispielsweise wird ein CCD-Sensor in die Lichttransfereinheit integriert, wie sie in der US2006176380A1 beschrieben ist. Die Wand der Lichttransfereinheit 11, die vor dem CCD-Sensor liegt, wird vorzugsweise als Linse ausgebildet, so dass auf ein separates optisches Element verzichtet werden kann.

Figur 5 zeigt die Lichttransfereinheit 11 von Figur 4 in einer Ausgestaltung, in der verschiedene vorteilhafte Massnahmen zur Einkopplung und Auskopplung von Licht realisiert sind, die einzeln oder in Kombination eingesetzt werden können.

In die Rückseite der Lichttransfereinheit 11, gegenüberliegend den Leuchtdioden 25, sind optische Elemente 1131 in den Ring 112 eingearbeitet, durch die die Strahlung innerhalb der Lichttransfereinheit 11 gleichmässig verteilt wird.

Sofern an einer Stelle der Lichttransfereinheit 11 Strahlung mit höherer Intensität und gegebenenfalls gerichtet austreten soll, so werden Elemente optischer Linsen 1112, z.B. einer Fresnel-Linse, in das Frontstück 111 eingearbeitet. Ferner können reflektierende Elemente 1113 an der Innenseite oder Aussenseite der Lichttransfereinheit 11 vorgesehen werden, durch die die Strahlung in eine gewünschte Richtung reflektiert wird. Beispielsweise erfolgt eine metallene Aufdampfung an den entsprechenden Stellen.

In einer weiteren bevorzugten Ausgestaltung wird der Teil der Aussenfläche 1111 der Lichttransfereinheit 11, über den Strahlung abgegeben wird, aufgeraut, so dass die Strahlung diffus abgegeben wird.

Schematisch ist ferner gezeigt, dass die Lichttransfereinheit 11 vorteilhaft mit einer Abdeckung 1000 versehen werden kann, die ein Fenster 1000 aufweist, welches zu einer bestimmten Position drehbar gegebenenfalls durch einen z.B. drehbaren oder axial verschiebbaren Schieber 1001, 1002 verschliessbar ist. Auf diese Weise kann der Anwender Licht an einer bestimmten Stelle der Lichttransfereinheit 11 auskoppeln und einen Teil des Arbeitsfeldes selektiv beleuchten.

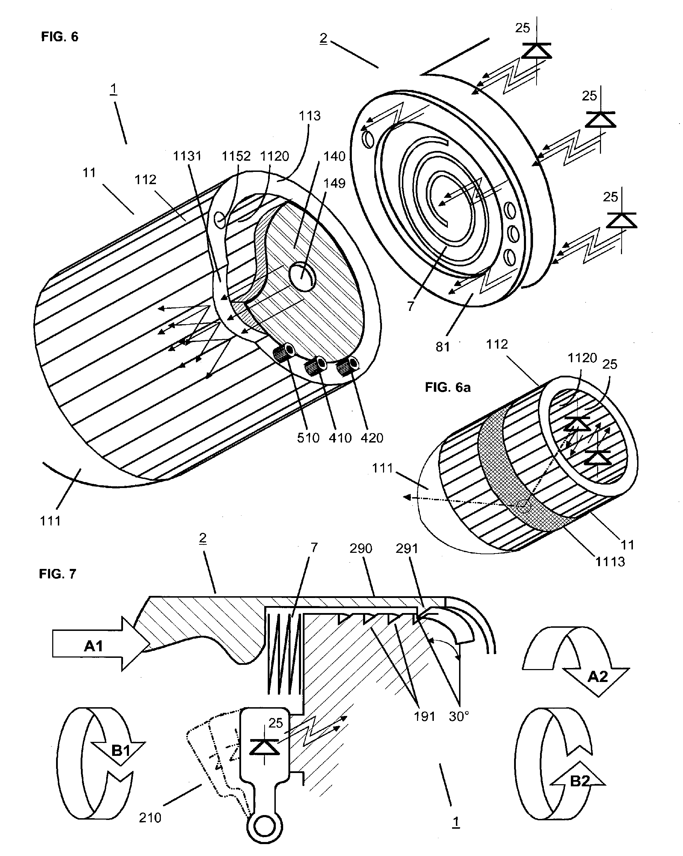

Figur 6 zeigt die Rückseite des Rings 112 der Lichttransfereinheit 11 von Figur 5, die mit optischen Elementen 1131 versehen ist, die der Einkopplung der von den Leuchtdioden 25 abgegebenen Strahlung dienen.

Gezeigt ist ferner eine an der Rückseite des Rings 112 in den Innenraum 1120 eingefügte Lagerplatte 140, die eine Öffnung 149 aufweist, in der die Turbinenwelle 141 der Maschine bzw. Turbine 14 gelagert wird (siehe Figur 3a). Ferner ist eine Filterscheibe bzw. ein Filterring 81 gezeigt, der Öffnungen zur Durchführung der Medienleitungen oder Anschlussstutzen 410, 420, 510 aufweist. Weiterhin ist ein elastisches Element 7 gezeigt, welches den Werkzeugkopf 1 und den Werkzeugkörper 2 auseinander drückt. Beispielsweise wird ein elastisches Kunststoffteil, eine Spiralfeder oder eine Schraubenfeder eingesetzt. Durch entsprechende Verbindungsmittel kann daher ein gewünschter Abstand zwischen dem Werkzeugkopf 1 und dem Werkzeugkörper 2 eingestellt werden.

Figur 6a zeigt ebenfalls die Rückseite der Lichttransfereinheit 11 von Figur 5. Bei dieser Ausgestaltung sind die Leuchtdioden 25 im Innenraum 1120 der Lichttransfereinheit 11 angeordnet. Dabei kann eine Ausnehmung in der Innenwand des Hohlzylinders 112 vorgesehen sein, in die die Leuchtdioden 25 eingebettet und vorzugsweise nach vorn ausgerichtet werden, damit die Strahlung zur Frontseite 111 gelenkt wird. Insbesondere, falls die Leuchtdioden an der Innenseite oder Aussenseite des Rings 11 bzw. des Hohlzylinders 112 angeordnet werden, ist es von Vorteil, die Leuchtdioden 25 und die vorzugsweise vorhandene Steuerelektronik auf einer flexiblen Leiterplatte, vorzugsweise einem isolierten Metallsubstrat (IMS) anzuordnen, welches die elektrischen und elektronischen Bauteile mit elektrischer Energie und Signalen versorgt und die resultierende Verlustwärme nach aussen ableitet. Die flexible Leiterplatte wird dazu an die Form der Lichttransfereinheit 11 angepasst, weshalb kaum Raum in Anspruch genommen und die Installation weiter Teile, insbesondere der Maschine 14 nicht behindert wird.

Figur 7 zeigt Verbindungsmittel 191; 290, 291, anhand derer der Werkzeugkopf 1 in einem gewünschten Abstand mit dem Werkzeugkörper 2 verbindbar ist. Der Werkzeugkörper 2 weist einen becherförmigen Flansch 290 auf, in dem ein Innengewinde 291 oder sich über einen bestimmten Winkel erstreckende Halterippen 291 vorgesehen sind.

Der Werkzeugkopf 1 kann, sofern zueinander korrespondierende Gewinde vorgesehen sind, in den becherförmigen Flansch 290 eingedreht werden (siehe Drehung Al) und durch Drehungen in die andere Richtung (siehe Drehung A2) wieder gelöst werden.

Sofern Halterippen 291 vorgesehen sind, kann der Werkzeugkopf 1 in den becherförmigen Flansch 290 eingestossen werden (siehe Verschiebung Bl). Sofern sich die Halterippen 291 nur über einen bestimmten Winkel von z.B. 30° erstrecken, kann die Verbindung gelöst werden, indem der Werkzeugkopf 1 um diesen Winkel gedreht wird (siehe Drehung B2). Es können auch weitere dem Fachmann bekannte Verbindungsarten, z.B. ein Bajonett-Verschluss eingesetzt werden.

In Figur 7 ist ferner gezeigt, dass die mit den Leuchtdioden 25 versehene Trägervorrichtung 210 drehbar gelagert ist. Beim Einstossen des Werkzeugkopfs 1 wird die Trägervorrichtung 210 zurückgedreht, weshalb der Winkel der Abstrahlung relativ zur Längsachse x des Handwerkzeugs 100 und somit die Einkopplung der Strahlung in die Lichttransfereinheit 11 ändert. Durch die Änderung der Einkopplung der Strahlung kann der Verlauf und somit der Austritt der Strahlung aus der Lichttransfereinheit 11 wahlweise geändert werden.

## Patentansprüche

1. Handwerkzeug (100), insbesondere Dentalwerkzeug, mit einer Beleuchtungsvorrichtung, mit einem Werkzeugkörper (2) und einem damit verbundenen Werkzeugkopf (1), der frontseitig ein Werkzeug (12) hält und der eine aus transparentem Werkstoff gefertigte Lichttransfereinheit (11) aufweist, die einen Ring (112) umfasst, dem Licht von wenigstens einer Leuchtdiode (25) zuführbar ist, **dadurch gekennzeichnet, dass** ein Frontstück (111) einstückig an den Ring (112) anschliesst, welches sich vorzugsweise kegelförmig oder halbkugelförmig bis zu einem Montagekanal (11) verjüngt, in dem das Werkzeug (12) in einer Montagevorrichtung (13) installierbar und mit einer Turbine (14) oder einem Elektromotor koppelbar ist, die bzw. der im Innenraum (1120) der Lichttransfereinheit (11) gelagert ist und der bzw. dem ein für den Antrieb erforderliches Medium (50) zuführbar ist.

2. Handwerkzeug (100) nach Anspruch 1, **dadurch gekennzeichnet, dass** die Lichttransfereinheit (11) das Gehäuse oder ein Gehäuseteil des Werkzeugkopfs (1) bildet und/oder dass die Lichttransfereinheit (11) aus wenigstens zwei zueinander komplementären Schalen gefertigt ist.

3. Handwerkzeug (100) nach Anspruch 1 oder 2, **dadurch gekennzeichnet, dass** zwei oder mehrere Leuchtdioden (25) oder zwei oder mehrere Gruppen (251, 252) je mit identischen oder unterschiedlichen Leuchtdioden (25) vorgesehen sind, die der Seite (113) der Lichttransfereinheit (11) gegenüber liegen, an der die Strahlung eingekoppelt wird.

4. Handwerkzeug (100) nach Anspruch 3, **dadurch gekennzeichnet, dass** eine Steuereinheit (9) vorgesehen ist, mittels der einzelne der Leuchtdioden (25) oder einzelne der Gruppen (252, 252) mit Leuchtdioden (25) zuschaltbar, abschaltbar oder individuell ansteuerbar sind, die gegebenenfalls unterschiedliche Farbstrahlungen und/oder unterschiedliche Abstrahlungsrichtungen aufweisen.

5. Handwerkzeug (100) nach einem der Ansprüche 1-4, **dadurch gekennzeichnet, dass** zumindest das Frontstück (111) der Lichttransfereinheit (11) mit einer aufgerauten Zone (1111), der Lichtbrechung dienenden Strukturen (1112) oder der Lichtreflektion dienenden Elemente (1113) versehen ist und/oder dass die den Leuchtdioden (25) zugewandte Seite, gegebenenfalls die Rückseite (113), poliert und/oder mit der Lichtlenkung dienenden Einformungen (1131) versehen ist.

6. Handwerkzeug (100) nach einem der Ansprüche 1-5, **dadurch gekennzeichnet, dass** innerhalb der Lichttransfereinheit (11) wenigstens ein Medienkanal (1141; 1142; 1151, 1152), wie ein Medienkanal für die Zufuhr oder Ableitung gasförmiger Medien oder flüssiger Medien, insbesondere für die Zufuhr des Mediums (50) für den Antrieb der Turbine (14), oder für die Installation elektrischer Leitungen vorgesehen ist.

7. Handwerkzeug (100) nach einem der Ansprüche 1-6, **dadurch gekennzeichnet, dass** der Werkzeugkopf (1) fest, gegebenenfalls einstückig, mit dem Werkzeugkörper (2) verbunden ist oder dass der Werkzeugkopf (1) lösbar mit dem Werkzeugkörper (2) verbunden ist.

8. Handwerkzeug (100) nach Anspruch 7, **dadurch gekennzeichnet, dass** der Werkzeugkopf (1) erste Verbindungsteile (191) aufweist, die zu zweiten Verbindungsteilen (290, 291) korrespondieren, die am Werkzeugkörper (2) vorgesehen sind, oder dass wenigstens ein dem Halten des Werkzeugkopfs (1) dienendes, separates drittes Verbindungsteil (3) mit dem Werkzeugkörper (2) lösbar verbunden ist.

9. Handwerkzeug (100) nach Anspruch 7 oder 8, **dadurch gekennzeichnet, dass** zwischen dem Werkzeugkopf (1) und dem Werkzeugkörper (2) ein elastisches Element (7), wie eine metallene Feder oder ein Kunststoffelement, vorgesehen ist, welches gegen den Werkzeugkopf (1) und gegen die Frontseite des Werkzeugkörpers (2) drückt und durch Anziehen eines der ersten, zweiten oder dritten Verbindungsteile (290, 291; 3) wahlweise komprimierbar ist.

10. Handwerkzeug (100) nach einem der Ansprüche 1-9, **dadurch gekennzeichnet, dass** die mit oder ohne Gehäuse vorliegenden Leuchtdioden (25) oder die Gruppen (252, 252) der Leuchtdioden (25) in COB-Technik oder SMD-Technik auf einem fest installierten, austauschbaren oder zumindest teilweise bewegbaren, festen oder flexiblen Leuchtdiodenträger (210) montiert sind, der vorzugsweise ein Keramik-Substrat oder ein isoliertes Metallsubstrat aufweist.

11. Handwerkzeug (100) nach Anspruch 10, **dadurch gekennzeichnet, dass** zwischen dem Werkzeugkopf (1) und dem Werkzeugkörper (2) eine fest montiertes oder wahlweise einsetzbare Filterelement (81) oder ein Fokussierelement (82) vorgesehen ist.

12. Handwerkzeug (100) nach einem der Ansprüche 1-11, **dadurch gekennzeichnet, dass** der Werkzeugkopf (1) eine Abdeckung mit einem verschiebbaren und/oder verschliessbaren Fenster (1000) aufweist und/oder dass im Frontstück (111) der Lichttransfereinheit (11) ein Gerät zur Aufnahme optischer Informationen (900) integriert ist, dessen Signale vorzugsweise über einen gesonderten Medienkanal weggeführt werden.

13. Handwerkzeug (100) nach einem der Ansprüche 1-12, **dadurch gekennzeichnet, dass** die Lichttransfereinheit (11) aus einem gegebenenfalls mit Farbstoffen versehenen transparenten Giessharzmasse gefertigt ist.

## Claims

1. Hand tool (100), particularly dental tool, with an illuminating device, with a tool body (2) and a tool head (1) connected thereto that holds on the front side a tool (12) and that comprises a light transfer unit (11) made of transparent material, which comprises a ring (112) to which light is guidable from at least one light emitting diode (25), **characterised in that** a front member (111) that is made of one piece adjoins the ring (112), which preferably tapers preferably conically or hemispherically up to a mounting channel (11), in which the tool (12) is installable in a mounting device (13) and is coupleable with a turbine (14) or an electrical motor, which is mounted within the interior space (1120) of the light transfer unit (11) and to which a medium (50) can be supplied that is required for driving.

2. Hand tool (100) according to claim 1, **characterised in that** the light transfer unit (11) forms a housing or a housing part of the tool head (1) and/or that the light transfer unit (11) is made of at least two shells that are complementary to one another.

3. Hand tool (100) according to claim 1 or 2, **characterised in that** two or more light emitting diodes (25) or two or more groups (251, 252) each with identical or different light emitting diodes (25) are provided, which are arranged opposite to the side (113) of the light transfer unit (11), in which the radiation is coupled into.

4. Hand tool (100) according to claim 3, **characterised in that** a control device (9) is provided, with which individual ones of the light emitting diodes (25) or individual ones of the groups (252, 252) of light emitting diodes (25), which, optionally, comprise different colour radiations and/or different directions of radiation, can be switched on, switched off or can be controlled individually.

5. Hand tool (100) according to one of the claims 1-4, **characterised in that** at least the front member (111) of the light transfer unit (11) comprises a roughened zone (1111) that comprises structures (1112) serving for light refraction or elements (1113) serving for light reflection, and/or that the side facing the light emitting diodes (25), if appropriate the back side (113), is polished and/or provided with indentations (1131) serving for directing light.

6. Hand tool (100) according to one of the claims 1-5, **characterised in that** at least one media channel (1141; 1142; 1151, 1152), such as a media channel for supplying or draining gaseous media or liquid media, particularly for supplying the media (50) for driving the turbine (14), or for the installation of electrical lines is provided within the light transfer unit (11).

7. Hand tool (100) according to one of the claims 1-6, **characterised in that** the tool head (1) is connected firmly, optionally in one piece, to the tool body (2) or that the tool head (1) is releasably connected to the tool body (2).

8. Hand tool (100) according to claim 7, **characterised in that** the tool head (1) comprises first connecting members (191) that correspond to second connecting members (290, 291) that are provided at the tool body (2), or that at least a separate third connecting member (3), which serves for holding the tool head (1), is releasably connected to the tool body (2).

9. Hand tool (100) according to claim 7 or 8, **characterised in that** between the tool head (1) and the tool body (2) an elastic element (7), such as a metal spring or a plastic element, is provided, which presses against the tool head (1) and against the front side of the tool body (2) and which is selectively compressible by fastening one of the first, second or third connecting members (290, 291; 3).

10. Hand tool (100) according to one of the claims 1-9, **characterised in that** the light emitting diodes (25) provided with or without casing or the groups (252, 252) of light emitting diodes (25) provided in COB-technique or SMD-technique are mounted on a firmly installed, exchangeable or at least partially moveable, firm or flexible light emitting diode-carrier (210), which preferably comprises a ceramic-substrate or an insulated metal substrate.

11. Hand tool (100) according to claim 10, **characterised in that** between the tool head (1) and the tool body (2) a firmly mounted or selectively insertable filter element (81) or a focussing element (82) is provided.

12. Hand tool (100) according to one of the claims 1-11, **characterised in that** the tool head (1) comprises a cover with a slideable and/or closable window (1000) and/or that in the front member (111) of the light transfer unit (11) a device for recording optical information (900) is integrated, whose signals are preferably transferred across a separate media channel.

13. Hand tool (100) according to one of the claims 1-12, **characterised in that** the light transfer unit (11) is made of a casting resin that is provided, optionally, with colorants.

## Revendications

1. Outil manuel (100), en particulier outil dentaire, muni d'un dispositif d'éclairage, avec un corps d'outil (2) et une tête d'outil (1) reliée à ce dernier, tête d'outil (1) qui maintient un outil (12) en face avant et qui présente une unité de transfert de lumière (11) fabriquée en matière transparente, qui présente une bague (112) à laquelle est amenée la lumière par au moins une diode lumineuse (25), **caractérisé en ce qu'**une pièce frontale (111) fait d'un seul tenant est placée dans la continuité à la bague (112) qui se termine de préférence en forme conique ou hémisphérique jusqu'à un canal de montage (11), dans lequel l'outil (12) peut être installé dans un dispositif de montage (13) et être accouplé à une turbine (14) ou un moteur électrique, qui est logés à l'intérieur (1120) de l'unité de transfert de lumière (11) et qui peuvent être alimenté par un fluide (50) nécessaire à l'entraînement.

2. Outil manuel (100) selon la revendication 1, **caractérisé en ce que** l'unité de transfert de lumière (11) forme le boîtier ou une partie de boîtier de la tête d'outil (1) et/ou **en ce que** l'unité de transfert (11) est réalisée à partir d'au moins deux coques complémentaires.

3. Outil manuel (100) selon la revendication 1 ou 2, **caractérisé en ce qu'**il est prévu deux ou plusieurs diodes lumineuses (25) ou deux ou plusieurs groupes (251, 252) avec chacun des diodes lumineuses (25) identiques ou différentes qui sont opposés à la face (113) de l'unité de transfert de lumière (11) à laquelle est accouplé le rayonnement.

4. Outil manuel (100) selon la revendication 3, **caractérisé en ce qu'**il est prévu une unité de commande (9), au moyen de laquelle les diodes lumineuses (25) ou groupes de diodes lumineuses (252, 252), qui présentent le cas échéant des rayonnements de couleur et/ou de direction différentes, peuvent être allumés, éteints ou commandés individuellement.

5. Outil manuel (100) selon l'une des revendications 1 à 4, **caractérisé en ce qu'**au moins la pièce frontale (111) de l'unité de transfert de lumière (11) est munie d'une zone rugueuse (1111), avec des structures (1112) servant à la réfraction de la lumière ou des éléments (1113) servant à la réflexion de la lumière et/ou **en ce que** la face tournée vers les diodes lumineuses (25) éventuellement la face arrière (113) est polie et/ou est munie de creux (1131) servant à l'orientation de la lumière.

6. Outil manuel (100) selon l'une des revendications 1 à 5, **caractérisé en ce qu'**à l'intérieur de l'unité de transfert de lumière (11), il est prévu au moins un canal des média (1141 ; 1142 ; 1151 ; 1152), comme un canal des média pour l'alimentation ou enlèvement des média gazeux ou liquides, en particulier pour l'alimentation du fluide pour l'entraînement de la turbine (14) ou pour l'installation de lignes électriques.

7. Outil manuel (100) selon l'une des revendications 1 à 6, **caractérisé en ce que** la tête d'outil est reliée fixement ou éventuellement d'un seul tenant au corps d'outils (2) et **en ce que** la tête d'outil (1) est reliée de manière amovible au corps d'outil (2).

8. Outil manuel (100) selon la revendication 7, **caractérisé en ce que** la tête d'outil (1) présente des premières parties de connexion (191) qui correspondent à des secondes parties de connexion (290, 291) qui sont prévues sur le corps d'outil (2) ou **en ce qu'**au moins une troisième partie séparée de connexion (3) servant au maintien de la tête d'outil (1) est reliée au corps d'outil (2) de manière amovible.

9. Outil manuel (100) selon la revendication 7 ou 8, **caractérisé en ce qu'**entre la tête d'outil (1) et le corps d'outil (2), il est prévu un élément élastique (7), tel qu'un ressort métallique ou un élément en matière plastique, qui est pressé contre la tête d'outil (1) et contre la face avant du corps d'outil (2) et qui peut être comprimé au choix en serrant l'une des premières, secondes ou troisièmes parties de connexion (290, 291 ; 3).

10. Outil manuel (100) selon l'une des revendications 1 à 9, **caractérisé en ce que** les diodes lumineuses (25) existantes avec ou sans boîtier ou les groupes de diodes lumineuses (25) munies selon la technique COB ou SMD sont montés sur un flexible ou fixe porte-diodes (210), qui est installé fixe, échangeable ou au moins partiellement mobile, et qui présente de préférence un substrat céramique ou un substrat métallique isolé.

11. Outil manuel (100) selon la revendication 10, **caractérisé en ce qu'**il est prévu, entre la tête d'outil (1) et le corps d'outil (2), un élément de filtre (81) monté fixement ou au choix insérable ou un élément de focalisation (82).

12. Outil manuel (100) selon l'une des revendications 1 à 11, **caractérisé en ce que** la tête d'outil (1) présente un couvercle avec un hublot (1000) fermable et/ou coulissant, et/ou dans la pièce avant (111) de l'unité de transfert de lumière (11), il est intégré un appareil pour la réception d'informations optiques (900) dont les signaux sont de préférence déviés par un canal de communication séparé.

13. Outil manuel (100) selon l'une des revendications 1 à 12, **caractérisé en ce que** l'unité de transfert de lumière (11) se compose d'une masse de résine coulée transparente dotée le cas échéant de colorants.
